# EUROPEAN PATENT APPLICATION

(11) **EP 4 618 272 A2**
(43) Date of publication of application: **17.09.2025**
(21) Application number: 24218907.4
(22) Date of filing: 11.12.2024
(51) Int. Cl.: H01M 50/209, H01M 50/242, H01M 50/244

(54) **END PLATE FOR BATTERY FRAME AND BATTERY MODULE AND BATTERY PACK INCLUDING THE SAME**

(30) Priority: 11.03.2024 KR 20240033948
(71) Applicant: SAMSUNG SDI CO., LTD., Yongin-si, Gyeonggi-do 17084 (KR)
(72) Inventor: Kim, Young Deok, 17084 Yongin-si, Gyeonggi-do (KR)
(74) Representative: Gulde & Partner

(57) **Abstract**

An end plate for a battery frame, including: a flat plate having insulating properties, and including: a first surface to receive an external force; a second surface spaced from the first surface by a thickness in a first direction; and a pair of accommodation guides recessed from opposite peripheral portions toward a center in a second direction crossing the first direction; an external force absorber at least partially buried in the accommodation guides to absorb the external force applied to the peripheral portions, and uniformly adjust a distribution of a stress in the flat plate with respect to the external force in the second direction; and a fixing member on the second surface at each of the opposite peripheral portions to correspond to the external force absorber, and to be fixed to the outside.

## Description

### BACKGROUND

### 1. Field

Aspects of embodiments of the present disclosure relate to an end plate, and a battery module and a battery pack including the end plate, and more particularly, to an end plate capable of uniformly distributing a stress caused by a swelling pressure of a battery cell, and a battery module and a battery pack including the end plate.

### 2. Description of the Related Art

Battery modules including a plurality of battery cells and battery packs including a plurality of battery modules are widely used to provide power that is much greater than the energy storage capacity of batteries. For example, recently, as the number of transportation devices that use electricity as power increases, the demand for high-capacity battery packs is increasing.

Generally, a battery module includes a plurality of battery cells that are aligned in one direction and fixed by a module frame, a plurality of busbars disposed on the module frame to detect electrical characteristics of individual cells, and a battery controller for controlling the operations of the battery cells.

A module frame is provided to include a protective means for protecting battery cells from external vibration or impact that occurs during the operation of a battery module, and a fixing means for fixing the battery module to a pack case when a battery module is used as a battery pack or energy storage device.

The above information disclosed in this Background section is for enhancement of understanding of the background of the present disclosure, and therefore, it may contain information that does not constitute related (or prior) art.

### SUMMARY

End plates may be disposed at opposite ends of a battery array to protect the battery cells, and may include a module interface for connecting adjacent battery modules to each other, and a bush for fixing a module, so that most constraints are applied at a design stage of a module frame.

Various constraints on the design of the end plates may be set to achieve a high capacity and a high efficiency of the battery modules, so that cell expansion characteristics inside the battery module may not be sufficiently considered at the design stage of the end plates.

However, recently, as a demand in the lifespan of battery modules increases, a demand for resolving a non-uniformity of a stress in the end plates due to a swelling pressure is increasing as a factor in improving the lifespan of the battery module.

Accordingly, an improved end plate capable of uniformly absorbing a swelling pressure, and a battery module and a battery pack including the end plate, may be desired.

Embodiments of the present disclosure may be directed to an end plate capable of absorbing a swelling pressure of a battery cell, and making an internal stress of the battery cell uniform or substantially uniform.

Embodiments of the present disclosure may be directed to a battery module including the end plate.

Embodiments of the present disclosure may be directed to a battery pack including the battery module.

However, the technical problem to be solved by the present disclosure is not limited to the above problem, and other problems not mentioned herein, and aspects and features of the present disclosure that would address such problems, will be clearly understood by those skilled in the art from the description of the present disclosure below.

According to one or more embodiments of the present disclosure, an end plate for a battery frame includes: a flat plate having insulating properties, and including: a first surface configured to receive an external force; a second surface spaced from the first surface by a thickness in a first direction; and a pair of accommodation guides recessed from opposite peripheral portions toward a center in a second direction crossing the first direction; an external force absorber at least partially buried in the accommodation guides to absorb the external force applied to the peripheral portions, and uniformly adjust a distribution of a stress in the flat plate with respect to the external force in the second direction; and a fixing member on the second surface at each of the opposite peripheral portions to correspond to the external force absorber, and configured to be fixed to the outside.

In an embodiment, the accommodation guides may include: one or more separation portions extending in the second direction from an inlet located in a side surface of the flat plate, and separated from the flat plate in a comb-tooth shape to separate adjacent recesses having a line shape from each other; a bottom portion connecting adjacent separation portions to each other and providing a bottom of the recesses; and a notch portion connected to the one or more separation portions and the flat plate to divide the recesses between the inlet and the bottom, and to divide the recesses into a primary accommodation portion connected to the inlet and a secondary accommodation portion connected to the bottom portion.

In an embodiment, the bottom portion may have a rounded shape so that the recesses extend in a region adjacent to the bottom portion.

In an embodiment, the notch portion may include an appendage protruding toward the bottom portion and having a breaking thickness configured to be selectively broken according to a magnitude of the external force.

In an embodiment, the breaking thickness may be in a range of 0.2 mm to 0.4 mm. Advantageously, this range is found to enable a high amount of breaking selectivity.

In an embodiment, a sidewall of the one or more separation portions adjacent to the notch portion and a sidewall of the flat plate may include a notch accommodation portion recessed in the first direction, and configured to accommodate a split notch from the notch portion that may be separated when the appendage is broken.

In an embodiment, the flat plate may include a plastic having the insulating properties.

In an embodiment, the external force absorber may include an elastomer configured to be injected into the accommodation guides as a solid body.

In an embodiment, the external force absorber may include at least one of a thermoplastic resin, a thermosetting resin, or an elastomer.

In an embodiment, the fixing member may include: a bush structure having a cylindrical shape fixed to the flat plate, and extending in a third direction perpendicular to the first direction and the second direction; and a bolt configured to extend through the bush structure to be fixed to an object.

According to one or more embodiments of the present disclosure, a battery module includes: a battery array including a plurality of battery cells aligned along a first direction, and having a length in the first direction and a width in a second direction perpendicular to the first direction; a driving controller on the battery array and configured to control operations of the battery cells; end plates at a front end and a rear end, respectively, of the battery array to fix the battery cells in the first direction, and configured to absorb a swelling pressure of the battery array to uniformly distribute an internal stress in the second direction; and side plates connected to the end plates to fix side surfaces of the battery array.

In an embodiment, the end plates may include: a flat plate having insulating properties, and including: a first surface in contact with the battery array, and configured to receive the swelling pressure; a second surface spaced from the first surface by a thickness in the first direction; and a pair of accommodation guides recessed from opposite peripheral portions toward a center in the second direction; an external force absorber at least partially buried in the accommodation guides to absorb the swelling pressure applied to the peripheral portions, and configured to uniformly adjust a distribution of a stress in the flat plate with respect to the swelling pressure in the second direction; and a fixing member on the second surface at each of the opposite peripheral portions to correspond to the external force absorber, and configured to be fixed to the outside.

In an embodiment, the accommodation guides may include: one or more separation portions extending in the second direction from an inlet located in a side surface of the flat plate, and separated from the flat plate in a comb-tooth shape to separate adjacent recesses having a line shape from each other; a bottom portion connecting adjacent separation portions to each other and provide a bottom of the recesses; and a notch portion connected to the one or more separation portions and the flat plate to divide the recesses between the inlet and the bottom, and to divide the recesses into a primary accommodation portion connected to the inlet and a secondary accommodation portion connected to the bottom portion.

In an embodiment, a sidewall of the one or more separation portions adjacent to the notch portion and a sidewall of the flat plate may include a notch accommodation portion recessed in the first direction, and configured to accommodate a split notch of the notch portion that may be separated if an appendage having a breaking thickness to be selectively broken according to a magnitude of the swelling pressure is broken.

In an embodiment, the driving controller may include: a busbar connecting adjacent battery cells from among the plurality of battery cells to each other; a circuit board electrically connected to the busbar; and a battery controller on the circuit board to individually control operations of the battery cells.

According to one or more embodiments of the present disclosure, a battery pack includes: a plurality of battery modules aligned along a lower housing, and electrically connected to each other; and an upper housing connected to the lower housing to separate the battery modules from the outside. Each of the battery modules includes: a battery array including a plurality of battery cells aligned along a first direction, and having a length in the first direction and a width in a second direction perpendicular to the first direction; a driving controller on the battery array to control operations of the battery cells; end plates at a front end and a rear end, respectively, of the battery array to fix the battery array in the first direction, and configured to absorb a swelling pressure of the battery array to uniformly distribute an internal stress in the second direction; and side plates connected to the end plates to fix side surfaces of the battery array.

In an embodiment, the end plates may include: a flat plate having insulating properties, and including: a first surface in contact with the battery array, and configured to receive the swelling pressure; a second surface spaced from the first surface by a thickness in the first direction; and a pair of accommodation guides recessed from opposite peripheral portions toward a center in the second direction; an external force absorber at least partially buried in the accommodation guides to absorb the swelling pressure applied to the peripheral portions, and uniformly adjust a distribution of a stress in the flat plate with respect to the swelling pressure in the second direction; and a fixing member on the second surface at each of the opposite peripheral portions to correspond to the external force absorber, and configured to be fixed to the outside.

In an embodiment, the accommodation guides may include: one or more separation portions extending in the second direction from an inlet located in a side surface of the flat plate, and separated from the flat plate in a comb-tooth shape to separate adjacent recesses having a line shape from each other; a bottom portion connecting adjacent separation portions to each other to provide a bottom of the recesses; and a notch portion connected to the one or more separation portions and the flat plate to divide the recesses between the inlet and the bottom, and to divide the recesses into a primary accommodation portion connected to the inlet and a secondary accommodation portion connected to the bottom portion.

In an embodiment, a sidewall of the one or more separation portions adjacent to the notch portion and a sidewall of the flat plate may include a notch accommodation portion recessed in the first direction, and configured to accommodate a split notch of the notch portion that may be separated if an appendage having a breaking thickness to be selectively broken according to a magnitude of the swelling pressure is broken.

In an embodiment, the fixing member may include: a bush structure having a cylindrical shape fixed to the flat plate, and extending in a third direction perpendicular to the first direction and the second direction; and a bolt configured to extend through the bush structure to be fixed to the lower housing.

According to some embodiments of the present disclosure, a swelling pressure applied to the peripheral of the end plate at which the fixing member having a high strength is disposed may be partially absorbed by the external force absorber having an elasticity, thereby reducing the swelling pressure applied to a peripheral portion of a flat plate. Accordingly, a difference in pressure applied to the peripheral portion and a central portion of the flat plate may be reduced, thereby increasing the uniformity of a distribution of a stress occurring inside the flat plate.

According to some embodiments of the present disclosure, even in a case where the fixing member having a high strength is disposed at the peripheral portion of the flat plate, the uniformity of a stress inside the plate may be increased, and a decrease in a lifespan of the end plate due to the non-uniformity of the stress may be suppressed.

However, aspects and features of the present disclosure are not limited to those described above, and other aspects and features not mentioned will be clearly understood by a person skilled in the art from the detailed description, described below.

### BRIEF DESCRIPTION OF THE DRAWINGS

The following drawings attached to this specification illustrate embodiments of the present disclosure, and further describe aspects and features of the present disclosure together with the detailed description of the present disclosure. Thus, the present disclosure should not be construed as being limited to the drawings:
FIG. 1 illustrates a perspective view showing a battery module according to one or more embodiments of the present disclosure;
FIG. 2 illustrates a perspective view showing an end plate in more detail of the battery module shown in FIG. 1;
FIG. 3A illustrates a perspective view showing a battery cell shown in FIG. 2;
FIG. 3B illustrates a cross-sectional view taken along the line a-a' of the battery cell shown in FIG. 3A;
FIG. 4 illustrates a perspective view showing an end plate included in the battery module shown in FIG. 1 according to one or more embodiments of the present disclosure;
FIG. 5 illustrates a perspective view showing a state in which an external force absorber to absorb a swelling pressure caused by the battery cell is disposed in the end plate shown in FIG. 4;
FIG. 6 illustrates a plan view showing an accommodation guide of the end plate shown in FIG. 4;
FIG. 7 illustrates an enlarged view of the portion A of the accommodation guide shown in FIG. 6;
FIG. 8 illustrates a state in which the external force absorber is disposed in the accommodation guide shown in FIG. 6;
FIG. 9 illustrates a state in which the external force absorber shown in FIG. 8 is ejected into a secondary accommodation portion;
FIG. 10 illustrates a graph showing a relationship between a pressure applied to the external force absorber and an elongation ratio of the external force absorber;
FIG. 11 illustrates a top perspective view illustrating a battery pack including the battery module shown in FIG. 1; and
FIG. 12 illustrates a perspective view illustrating the battery pack including the battery module shown in FIG. 1.

### DETAILED DESCRIPTIONS

Hereinafter, embodiments of the present disclosure will be described, in detail, with reference to the accompanying drawings. The terms or words used in this specification and claims should not be construed as being limited to the usual or dictionary meaning and should be interpreted as meaning and concept consistent with the technical idea of the present disclosure based on the principle that the inventor can be his/her own lexicographer to appropriately define the concept of the term to explain his/her invention in the best way.

The embodiments described in this specification and the configurations shown in the drawings are only some of the embodiments of the present disclosure and do not represent all of the technical ideas, aspects, and features of the present disclosure. Accordingly, it should be understood that there may be various equivalents and modifications that can replace or modify the embodiments described herein at the time of filing this application.

It will be understood that when an element or layer is referred to as being "on," "connected to," or "coupled to" another element or layer, it may be directly on, connected, or coupled to the other element or layer or one or more intervening elements or layers may also be present. When an element or layer is referred to as being "directly on," "directly connected to," or "directly coupled to" another element or layer, there are no intervening elements or layers present. For example, when a first element is described as being "coupled" or "connected" to a second element, the first element may be directly coupled or connected to the second element or the first element may be indirectly coupled or connected to the second element via one or more intervening elements.

In the figures, dimensions of the various elements, layers, etc. may be exaggerated for clarity of illustration. The same reference numerals designate the same elements. As used herein, the term "and/or" includes any and all combinations of one or more of the associated listed items. Further, the use of "may" when describing embodiments of the present disclosure relates to "one or more embodiments of the present disclosure." Expressions, such as "at least one of" and "any one of," when preceding a list of elements, modify the entire list of elements and do not modify the individual elements of the list. When phrases such as "at least one of A, B and C, "at least one of A, B or C," "at least one selected from a group of A, B and C," or "at least one selected from among A, B and C" are used to designate a list of elements A, B and C, the phrase may refer to any and all suitable combinations or a subset of A, B and C, such as A, B, C, A and B, A and C, B and C, or A and B and C. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It will be understood that, although the terms first, second, third, etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Thus, a first element, component, region, layer, or section discussed below could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (rotated 90 degrees or at other orientations), and the spatially relative descriptors used herein should be interpreted accordingly.

The terminology used herein is for the purpose of describing embodiments of the present disclosure and is not intended to be limiting of the present disclosure. As used herein, the singular forms "a" and "an" are intended to include the plural forms as well, unless the context clearly indicates otherwise. It will be further understood that the terms "includes," "including," "comprises," and/or "comprising," when used in this specification, specify the presence of stated features, integers, steps, operations, elements, and/or components but do not preclude the presence or addition of one or more other features, integers, steps, operations, elements, components, and/or groups thereof.

Also, any numerical range disclosed and/or recited herein is intended to include all sub-ranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein, and any minimum numerical limitation recited in this specification is intended to include all higher numerical limitations subsumed therein. Accordingly, Applicant reserves the right to amend this specification, including the claims, to expressly recite any sub-range subsumed within the ranges expressly recited herein. All such ranges are intended to be inherently described in this specification.

References to two compared elements, features, etc. as being "the same" may mean that they are "substantially the same". Thus, the phrase "substantially the same" may include a case having a deviation that is considered low in the art, for example, a deviation of 5% or less. In addition, when a certain parameter is referred to as being uniform in a given region, it may mean that it is uniform in terms of an average.

Throughout the specification, unless otherwise stated, each element may be singular or plural.

Arranging an arbitrary element "above (or below)" or "on (under)" another element may mean that the arbitrary element may be disposed in contact with the upper (or lower) surface of the element, and another element may also be interposed between the element and the arbitrary element disposed on (or under) the element.

In addition, it will be understood that when a component is referred to as being "linked," "coupled," or "connected" to another component, the elements may be directly "coupled," "linked" or "connected" to each other, or another component may be "interposed" between the components".

Throughout the specification, when "A and/or B" is stated, it means A, B or A and B, unless otherwise stated. That is, "and/or" includes any or all combinations of a plurality of items enumerated. When "C to D" is stated, it means C or more and D or less, unless otherwise specified.

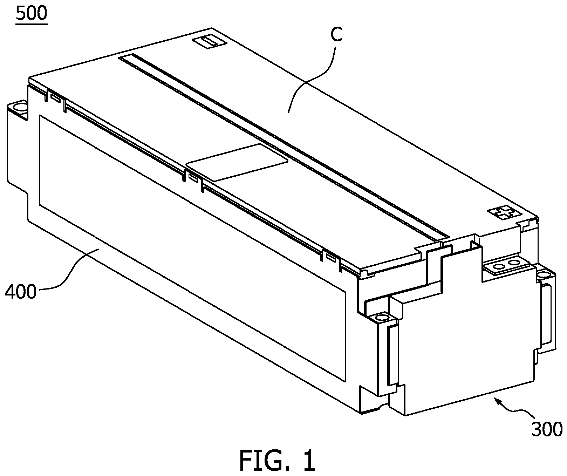

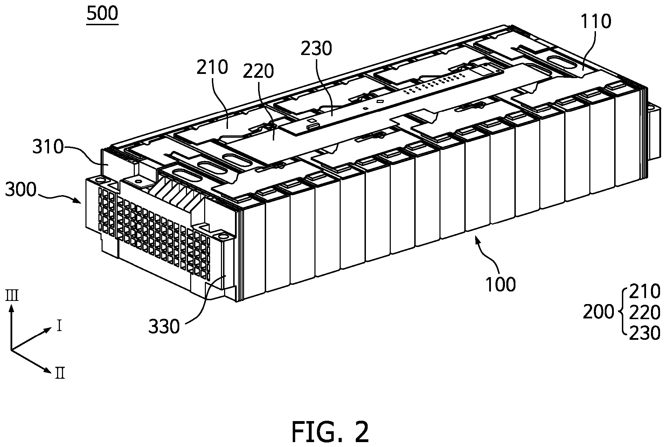

FIG. 1 illustrates a perspective view showing a battery module according to one or more embodiments of the present disclosure. FIG. 2 illustrates a perspective view showing an end plate in more detail of the battery module shown in FIG. 1.

Referring to FIGS. 1 and 2, a battery module 500 according to some embodiments of the present disclosure may include a battery array 100 including a plurality of battery cells 110, a driving controller 200 that controls operations of the battery cells 110, end plates 300 disposed at a front end and a rear end of the battery array 100 to fix the battery cells 110, and sides plate 400.

The battery cells 110 may be aligned on a bottom plate along a first direction I, and may be fixed by a pair of the end plates 300 and a pair of the side plates 400.

Accordingly, the battery cells 110 aligned on the bottom plate may be fixed at each of a front side, a rear side, a left side, and a right side to form the battery array 100, and may be separated from the outside by a cover C covering an upper portion of the battery array 100. The battery cells 110 separated from the outside by the end plates 300, the side plates 400, the bottom plate, and the cover C may be formed into the battery module 500 that functions as a single energy storage device.

The battery cell 110 may include various suitable unit cells capable of generating electrical energy. Hereinafter, the battery cell 110 may be described in more detail as a secondary battery 90, which may be reversibly charged and discharged.

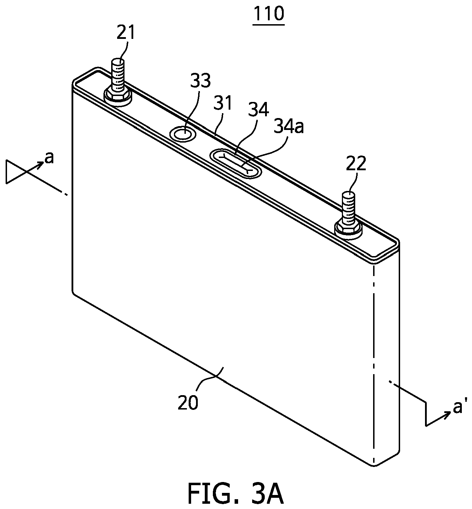

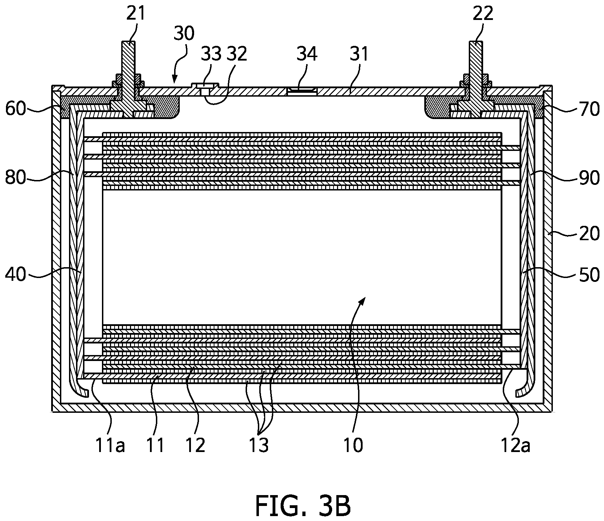

FIG. 3A illustrates a perspective view showing the battery cell shown in FIG. 2. FIG. 3B illustrates a cross-sectional view taken along the line a-a' of the battery cell shown in FIG. 3A.

Referring to FIGS. 3A and 3B, the secondary battery 90 according to some embodiments of the present disclosure may include at least one electrode assembly 10, a case 20 in which the electrode assembly 10 is embedded, and a cap assembly 30 connected to (e.g., coupled to or attached to) an opening of the case 20. The electrode assembly 10 may be formed by interposing a separator 13, which is an insulator, between a positive electrode plate 11 and a negative electrode plate 12, and winding or stacking the positive electrode plate 11, the separator 13, and the negative electrode plate 12.

An example in which the secondary battery 90 according to some embodiments is a prismatic lithium ion battery will be described in more detail. However, the present disclosure is not limited thereto, and embodiments of the present disclosure may be applied to various suitable kinds of batteries, such as lithium polymer batteries or cylindrical batteries.

The positive electrode plate 11 and the negative electrode plate 12 may include coated portions, which are regions in which an active material is applied on a current collector made of a thin metal foil, and uncoated portions 11a and 12a, which are regions that are not coated with an active material.

The positive electrode plate 11 and the negative electrode plate 12 may be wound after the separator 13, which is the insulator, is interposed therebetween. However, the present disclosure is not limited thereto, and the electrode assembly 10 may have a structure in which a positive electrode and a negative electrode, each including a plurality of sheets, are alternately stacked with a separator interposed therebetween.

The case 20 may form the overall exterior of the secondary battery 90, and may be made of a conductive metal, such as aluminum, an aluminum alloy, or nickel-plated steel. In some embodiments, the case 20 may provide a space in which the electrode assembly 10 is accommodated.

The cap assembly 30 may include a cap plate 31 that covers the opening of the case 20, and the case 20 and the cap plate 31 may be made of a conductive material. A positive electrode terminal 21 and a negative electrode terminal 22 connected to the positive electrode plate 11 and the negative electrode plate 12 may be installed to pass through the cap plate 31, and may protrude to the outside.

In other words, the positive electrode terminal 21 and the negative electrode terminal 22 may protrude to the outside to be respectively disposed at both ends (e.g., opposite ends) of the case 20 that extend in a second direction.

In some embodiments, as shown in FIG. 2, the secondary batteries 90/110 aligned in a line in the first direction I may be disposed, such that the positive electrode terminals 21 and the negative electrode terminals 22 are alternately positioned. Accordingly, each secondary battery 90 may function as an energy source of which an output power increases in proportion to a number of at least some of the secondary batteries 90 that are connected in series with each other by busbars 210 to be described in more detail below.

The cap plate 31 may be made of a thin plate, and may be connected to (e.g., coupled to or attached to) the opening of the case 20. An electrolyte injection port 32 at (e.g., in or on) which a sealing stopper 33 may be installed may be formed in the cap plate 31, and a vent 34 in which a notch 34a is formed may be installed in the cap plate 31.

The positive electrode terminal 21 and the negative electrode terminal 22 may be electrically connected to positive and negative electrode current collectors 40 and 50 welded and joined to the positive electrode uncoated portion 11a and the negative electrode uncoated portion 12a. For example, the positive electrode terminal 21 and the negative electrode terminal 22 may be welded and joined to or integrally connected to (e.g., coupled to or attached to) the positive electrode current collector 40 and the negative electrode current collector 50.

The positive electrode terminal 21 and the negative electrode terminal 22 welded and connected to (e.g., coupled to or attached to) the positive electrode current collector 40 and the negative electrode current collector 50 may be connected to (e.g., coupled to or attached to) first and second lower insulating members 60 and 70 and one ends of first and second separating members 80 and 90.

While the battery cells 110 are described as being disposed in a line to form a single cell row, the present disclosure is not limited thereto, and a plurality of cell rows may be disposed according to a desired output power of the battery module 500.

Referring again to FIG. 2, the driving controller 200 capable of individually controlling the operations of the battery cells 110 may be disposed on the battery cells 110 aligned along the first direction I.

The driving controller 200 may include busbars 210 connecting adjacent battery cells 110 to each other, a circuit board 220 electrically connected to the busbar 210, and a battery controller 230 disposed on the circuit board 220 to individually control the operations of the battery cells 110.

The busbar 210 may electrically connect adjacent battery cells 110 to each other by connecting the positive electrode terminal 21 and the negative electrode terminal 22 that are adjacent to each other.

The busbar 210 may be made of a conductive member that electrically connects the adjacent battery cells 110 to each other by connecting (e.g., coupling or attaching) the positive electrode terminal 21 and the negative electrode terminal 22 of the adjacent battery cells 110 to each other. For example, the busbar 210 may be made of a low-resistance metal plate, and may be connected to the positive electrode terminal 21 or the negative electrode terminal 22 of the battery cells 110 that are adjacent to each other.

In other words, the battery cells 110 may be aligned so that the positive electrode terminals 21 and the negative electrode terminals 22 are alternately arranged along the first direction I, and the busbar 210 may connect the positive electrode terminal 21 and the negative electrode terminal 22 of the adjacent battery cells 110 to each other. Accordingly, at least some of the battery cells 110 provided in the battery array 100 may be connected to each other in series by the busbars 210.

In some embodiments, the busbars 210 may be disposed along a line along both ends (e.g., opposite ends) of each battery cell 110 in a second direction II, and the vent 34 may be exposed at a central portion of the battery cell 110.

For example, the circuit board 220 may include a printed circuit board, which may be provided as a flexible board, and in which a fine circuit for a signal transmission is printed therein. Each busbar 210 may be connected to the circuit board 220 through a detection line, and may detect operation information of each corresponding battery cell 110 to transmit the detected operation information to the circuit board 220.

In some embodiments, the circuit board 220 may be provided as a flexible printed circuit board (FPCB), and may be disposed in various suitable shapes. Accordingly, the circuit board 220 may be transformed into various suitable shapes on the battery array 100, thereby reducing a restriction on an installation space, and increasing a freedom of installation for various additional devices.

In some embodiments, battery operation information may include a voltage and a driving temperature of the individual battery cells 110. However, the present disclosure is not limited thereto, and in addition to the voltage and the driving temperature, various suitable kinds of operation information may be included according to the demands of the battery module 500 or a battery pack 1000, which will be described in more detail below, equipped with the battery module 500.

The detected operation information of the battery cell 110 may be transmitted to the battery controller 230 disposed on the circuit board 220 to be processed.

For example, the battery controller 230 may be disposed on an upper surface of the circuit board 220, and may include a control process for processing information about an operating state of each battery cell 110 to individually control the operation of the battery cell 110.

The battery controller 230 may individually control each of the battery cells 110 by processing individual operation information of the battery cells 110 detected through the detection line. Accordingly, the battery module 500 may be driven in an optimal operating state.

In some embodiments, the battery controller 230 may include a battery management system (BMS) that performs a monitoring operation for each battery cell 110, a cell balancing for reducing a deviation between the battery cells 110, and a cell operation control for suppressing overcharging and overdischarging of individual battery cells 110.

In some embodiments, the busbar 210, the circuit board 220, and the battery controller 230 may be fixed to a busbar holder provided on the battery array 100, and may be provided to be separated from the outside by the cover C.

In some embodiments, the battery module 500 may be provided in a hexahedral shape with a rectangular cross section defined by the first direction I and the second direction II, and thus, the driving controller 200 may be provided in a rectangular flat or substantially flat structure that covers an upper surface of the battery array 100. Accordingly, the driving controller 200 may also be provided in a quadrangular shape extending in the first direction I.

In some embodiments, the end plates 300 may be disposed at the front and rear ends of the battery array 100 to fix the battery cells 110 in the first direction I, and the side plates 400 may be disposed at both sides (e.g., opposite sides) of the battery array 100 to fix the battery cells 110 in the second direction II.

In some embodiments, as will be described in more detail below, the side plate 400 may be disposed to surround (e.g., around a periphery of) a bush structure 331 provided in the end plate 300, and an external force absorber 320 disposed between the bush structure 331 and the battery array 100 may be provided to be covered by the side plate 400.

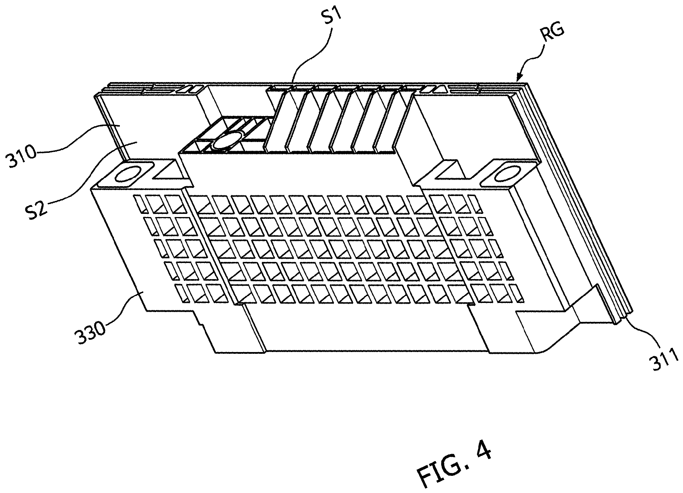

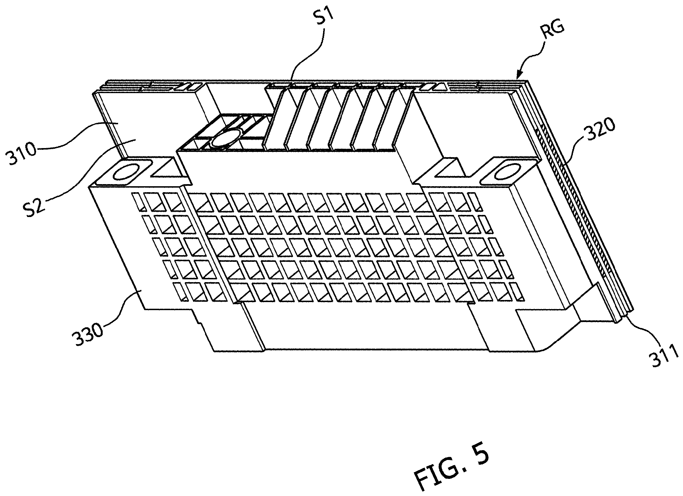

FIG. 4 illustrates a perspective view showing the end plate included in the battery module shown in FIG. 1 according to one or more embodiments of the present disclosure. FIG. 5 illustrates a perspective view showing a state in which the external force absorber to absorb a swelling pressure caused by the battery cell 110 is disposed in the end plate shown in FIG. 4.

Referring to FIGS. 4 and 5, the end plate 300 according to some embodiments of the present disclosure may include an insulating flat plate 310, the external force absorber 320, and a fixing member 330.

For example, the insulating flat plate 310 may include a first surface S1 to which a swelling pressure that is an external force is applied, a second surface S2 spaced apart by a thickness from the first surface S1 in the first direction I, and a pair of accommodation guides RG recessed from both peripheral portions (e.g., opposite peripheral portions) toward the center along the second direction II that is a width direction.

The flat plate 310 may be positioned at the front end of the battery array 100, and may be in surface contact with a side surface of the battery cell 110 positioned at a first position in the first direction I. In other words, a surface of the case 20 of the secondary battery 90 shown in FIG. 3A positioned at the front end of the battery array 100 may be in surface contact with the insulating flat plate 310 positioned at the front end of the battery array 100.

Similarly, the flat plate 310 may be positioned at the rear end of the battery array 100, and may be in surface contact with a side surface of the battery cell 110 positioned at a last position in the first direction I. In other words, a surface of the case 20 of the secondary battery 90 shown in FIG. 3A positioned at the rear end of the battery array 100 may be in surface contact with the insulating flat plate 310 positioned at the rear end of the battery array 100.

Accordingly, a pressure caused by the swelling of the battery cells 110 constituting the battery array 100 may be accumulated in the first direction I, and may be intensively applied to the flat plates 310 positioned at the front and rear ends.

In some embodiments, the flat plate 310 may be provided in a three-dimensional shape that sufficiently covers a side surface of the case 20 of the secondary battery 90, and may be made of an insulating material that may be electrically insulated from the secondary battery 90.

For example, the flat plate 310 may be made of a plastic having excellent molding processing properties and electrical insulating properties. In other words, as will be described in more detail below, the flat plate 310 may be made of a suitable material having excellent molding processing properties, such that the accommodation guide RG provided as a line-shaped recess R may be precisely formed in the flat plate 310.

The flat plate 310 may include the first surface S1 in contact with the battery cell 110, and the second surface S2 that is spaced apart by a thickness from the first surface S1 and on which the fixing member 330 is disposed. The first surface S1 and the second surface S2 may each be provided as a flat or substantially flat surface. Accordingly, a swelling pressure generated from the battery cell 110 may be uniformly or substantially uniformly applied to the first surface S1, and the fixing member 330 may be arranged in a line shape in a third direction III.

The accommodation guide RG including a plurality of recesses R extending from a side surface toward the center may be disposed on both peripheral portions (e.g., opposite peripheral portions) of the first surface S1 and the second surface S2. The external force absorber 320 capable of absorbing a swelling pressure, which is an external force applied to the first surface S1, may be disposed in the accommodation guide RG, so that the internal stress of the flat plate 310 due to the swelling pressure may be prevented or substantially prevented from being concentrated on the fixing member 330.

The fixing member 330 for fixing the battery module 500 may be disposed at both peripheral portions (e.g., opposite peripheral portions) of the flat plate 310 in the second direction II, and the battery cells 110 may have configurations in surface contact with the entire or substantially entire first surface S1. Accordingly, the swelling pressure of the battery cell 110 may be applied through the entire surface of the flat plate 310.

However, the fixing members 330 disposed at both peripheral portions of the flat plate 310 may have a sufficient degree of rigidity desired for fixation, so that although a central portion of the flat plate 310 may swell due to a swelling pressure, both peripheral portions thereof may maintain or substantially maintain the initial shape by the strength of the fixing members 330. Accordingly, the internal stress of the flat plate 310 corresponding to the swelling pressure of the battery cell 110 may be concentrated on both peripheral portions at which the fixing members 330 are disposed.

Stress concentration on the peripheral portion of the flat plate 310 may reduce a lifespan of the end plate 300, resulting in a decrease in a lifespan of the entire battery module 500.

The accommodation guide RG may be disposed inside both peripheral portions of the flat plate 310 at which the fixing members 330 having a high strength are positioned, and the external force absorber 320 capable of absorbing a swelling pressure applied to the peripheral portions may be disposed.

The swelling pressure applied to the fixing member 330 having a high strength may be partially absorbed, thereby preventing or substantially preventing a stress from being concentrated on opposite peripheral portions of the flat plate 310, and increasing the uniformity of distribution of an internal stress occurring in the flat plate 310 in the second direction II.

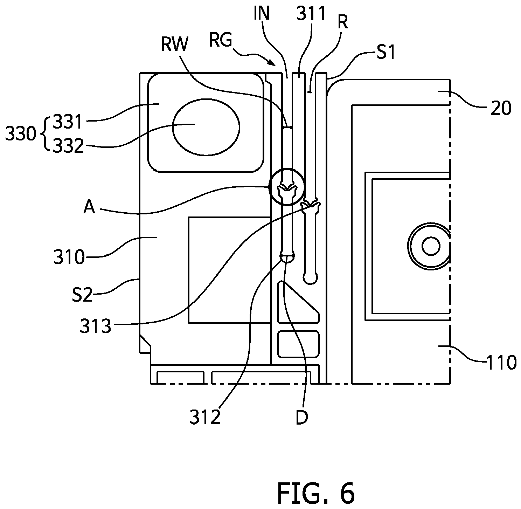

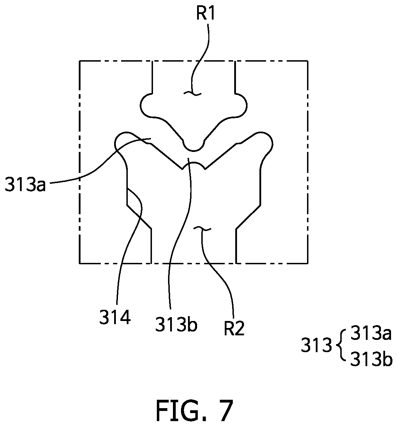

FIG. 6 illustrates a plan view showing the accommodation guide of the end plate shown in FIG. 4. FIG. 7 illustrates an enlarged view of the portion A of the accommodation guide shown in FIG. 6.

Referring to FIGS. 6 and 7, the accommodation guide RG according to some embodiments of the present disclosure may include a separation portion 311, a bottom portion 312, and a notch portion 313.

The separation portion 311 may extend in the second direction II from an inlet IN provided at a side surface of the flat plate 310, and may be separated from the flat plate 310 in a comb-tooth shape to separate adjacent line-shaped recesses R.

In other words, when the recesses R are formed at a suitable interval (e.g., a certain or predetermined interval) from the side surface of the flat plate 310, the flat plate 310 positioned between the adjacent recesses R may be formed as the separation portion 311 for separating the recesses R. Accordingly, when n recesses R are formed (where n is a natural number) on the side surface of the flat plate 310, (n-1) separation portions 311 may be positioned between the n recesses R.

The recesses R may have an accommodation width (e.g., a set accommodation width) RW, and may be aligned along the first direction I at intervals corresponding to a width of the separation portion 311. The accommodation guide RG in which two recesses R are separated by a single separation portion 311 is illustrated in the figures, but the present disclosure is not limited thereto, and the number of recesses R constituting the accommodation RG may be variously modified according to the capacity and the battery characteristics of the battery cell 110.

The recess R may have the same or substantially the same height as that of the flat plate 310 in the third direction III, and may have a length greater than a width of the fixing member 330 in the second direction II. In other words, the recess R may be provided as a three-dimensional space defined by (e.g., limited by) the accommodation width RW, the height, and the length.

The bottom portion 312 of the recess R along the second direction II may be rounded, and may have a shape of a semicircular plane having a diameter D greater than the accommodation width RW. Therefore, when the external force absorber 320 accommodated in the recess R is compressed by a swelling pressure, the semicircular plane may be uniformly or substantially uniformly compressed by the bottom portion 312 having a semicylindrical shape extending in the third direction III.

Accordingly, when the external force absorber 320 absorbs the swelling pressure, the swelling pressure may be uniformly or substantially uniformly absorbed throughout the entire area of the external force absorber 320, so that the distribution of the stress inside the external force absorber 320 may also be set uniformly or substantially uniformly.

The bottom portion 312 may be a portion that closes the recess R at an end of the recess R, and may constitute a portion of the flat plate 310. Accordingly, the bottom portions 312 of adjacent recesses R may have configurations connected to each other. In other words, the bottom portion 312 of the recess R is provided as a region that remains at the peripheral portion of the flat plate 310 without being formed as the recess R.

The notch portion 313 may be connected to the separation portion 311 and the flat plate 310 to divide the recess R between the inlet IN and the bottom portion 312, and may separate the recess R into a primary accommodation portion R1 connected to the inlet IN and a secondary accommodation portion R2 connected to the bottom portion 312.

In other words, the notch portion 313 may be positioned at a middle of the recess R, and may divide the recess R. For example, the notch portion 313 may be provided in a V shape having an appendage that protrudes toward the bottom portion 312, and may have a braking thickness to be selectively broken according to a magnitude of an external pressure.

The notch portion 313 may include a leg 313a connected between adjacent separation portions 311 or between the flat plate 310 and the separation portion 311, and an appendage 313b to which the leg 313a positioned to be inclined toward the bottom portion 312 is connected.

The notch portion 313 may be provided so that the appendage 313b is broken if a swelling pressure exceeding a shape elastic force is applied to the peripheral portion of the flat plate 310 due to a shape elastic modulus obtained by the V-shape.

In a case where the notch portion 313 is fractured, the external force absorber 320 accommodated and compressed in the primary accommodation portion R1 may be compressed by a swelling pressure sufficient to break the notch portion 313 and may be extruded into the secondary accommodation portion R2.

Accordingly, by using a portion of the swelling pressure as breaking energy of the notch portion 313, the swelling pressure applied to the peripheral portion of the flat plate 310 may be reduced, and the internal stress of the peripheral portion may be reduced.

In some embodiments, a thickness of the appendage 313b may be in a range of 0.2 mm to 0.4 mm. However, the present disclosure is not limited thereto, and the thickness of the appendage 313b may be variously modified according to the swelling pressure of the battery cell 110 and the configuration of the flat plate 310.

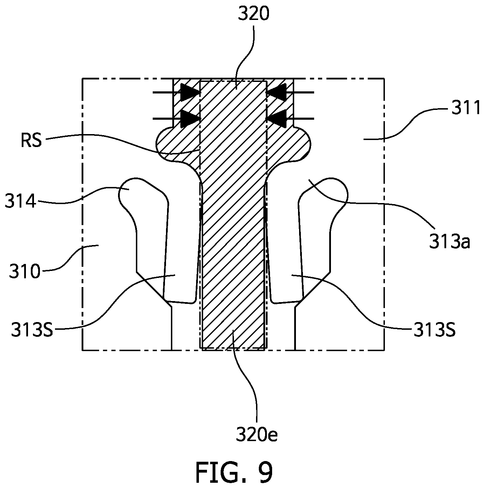

A notch accommodation portion 314, in which a split notch 313S (e.g., see FIG. 9) of the notch portion 313 that is separated when the appendage 313b is broken may be accommodated, may be disposed at a lower portion of the notch portion 313.

The split notch 313S may impede the flow of the external force absorber 320 extruded from the primary accommodation portion R1 to the secondary accommodation portion R2. Accordingly, a cavity having a constant or substantially constant size along a sidewall of the separation portion 311 adjacent to the notch portion 313 and a sidewall of the flat plate 310 in the first direction I may be formed. As such, the notch accommodation portion 314 may be provided at a lower side of the notch portion 313.

Accordingly, in a case where the appendage 313b of the notch portion 313 is broken, the leg 313a fixed to the separation portion 311 or the flat plate 310 may form the split notch 313S, and the split notch 313S may be prevented or substantially prevented from providing a resistance on the flow of the external force absorber 320 by being accommodated and extruded into the notch accommodation portion 314 provided at the side by an extrusion force of the external force absorber 320.

As an example, the external force absorber 320 may be made of an elastomer that is injected into the accommodation guide RG and provided as a solid body.

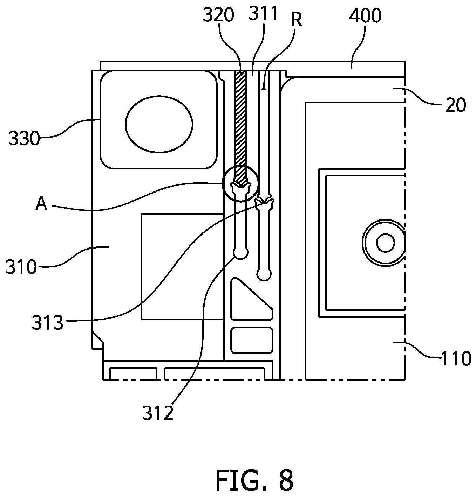

FIG. 8 illustrates a state in which the external force absorber is disposed in the accommodation guide shown in FIG. 6. FIG. 9 illustrates a state in which the external force absorber shown in FIG. 8 is ejected into the secondary accommodation portion.

In a case where the end plates 300 are disposed at the front and rear ends of the battery array 100, the external force absorber 320 may be embedded through the inlet IN using injection molding to bury or be buried in the primary accommodation portion R1.

The external force absorber 320 may be first formed in the form of a molten injection product in a gel state or a solution state, and then may be injected into the primary accommodation portion R1 through a molding nozzle. An injected molten liquid may be cured to form the external force absorber 320 that is a solid material having an elasticity.

For example, the external force absorber 320 may be made of an elastomer including any one of a thermoplastic resin, a thermosetting resin, and/or an elastomer.

In a case where the external force absorber 320 is embedded in the primary accommodation portion R1 of the accommodation guide RG, a swelling pressure applied to the peripheral portion of the flat plate 310 may be consumed to compress the external force absorber 320 having the elasticity, thereby reducing the swelling pressure applied to the flat plate 310. Accordingly, by reducing the swelling pressure, which is an external force applied to the peripheral portion of the flat plate 310, a difference in pressure applied to the peripheral portion and the central portion of the flat plate 310 may be reduced. A decrease in the difference in pressure applied to the flat plate 310 may increase the uniformity of distribution of the stress occurring inside the flat plate 310.

Therefore, even in a case where the fixing member 330 having a high strength is disposed at the peripheral portion of the flat plate 310, the external force absorber 320 may reduce a magnitude of a pressure applied to the peripheral portion of the flat plate 310, thereby improving the uniformity of the internal stress, and preventing or substantially preventing a decrease in a lifespan of the end plate due to non-uniformity of the stress in the flat plate 310.

In some embodiments, in an early stage of the lifespan of the battery module 500, the elasticity of the external force absorber 320 may be sufficient to sufficiently reduce a pressure applied to the peripheral portion of the flat plate 310 only with the external force absorber 320 accommodated in the primary accommodation portion R1.

However, as a use time of the battery module 500 increases, an amount of expansion of the battery cell 110 may increase, and a swelling pressure may also increase. Accordingly, a greater swelling pressure may be applied to the battery module 500 at a final stage of the lifespan as compared with that of the battery module 500 in an early stage of the lifespan.

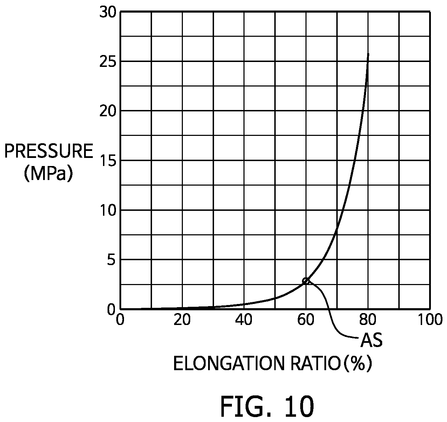

FIG. 10 illustrates a graph showing a relationship between a pressure applied to the external force absorber and an elongation ratio of the external force absorber.

Referring to FIG. 10, in a case where a swelling pressure exceeding an allowable elongation ratio AS of the external force absorber 320 is applied, the elongation ratio of the external force absorber 320 may change significantly even at a small change in the swelling pressure.

Accordingly, in a case where the battery module 500 is used until the final state of an expected lifespan thereof, a magnitude of the swelling pressure applied to the flat plate 310 may also abruptly increase as an amount of expansion of the battery cell increases. Accordingly, the amount of elongation of the external force absorber 320 may abruptly increase, and thus, a new stress concentration may be generated by the elongated external force absorber 320.

In order to prevent the new stress concentration, a breaking thickness of the appendage 313b of the notch portion 313 may be configured (e.g., may be set), such that when the external force absorber 320 is elongated to the allowable elongation ratio AS due to the swelling pressure, the appendage 313b of the notch portion 313 is broken.

For example, the allowable elongation ratio AS may be in a range of about 50% to about 70% of the maximum elongation ratio of the external force absorber 320. In some embodiments, the allowable elongation ratio AS may be 60 % of the maximum elongation ratio.

Accordingly, the external force absorber 320 may be provided so that the notch portion 313 may be broken at the allowable elongation ratio AS with respect to the maximum swelling pressure that may occur in the final state of the lifespan of the battery module 500. Thus, even in the final stage of the lifespan of the battery module 500, an external force may be sufficiently absorbed to ensure uniform distribution of the stress in the flat plate 310, thereby increasing the uniformity of the internal stress in the end plate throughout the expected lifespan of the battery module 500.

In a case where the notch portion 313 is broken, the recess R may be formed into an integrated recess RS (e.g., see FIG. 9) having a reduced size due to a swelling pressure applied to the flat plate 310. In other words, the primary accommodation portion R1 and the secondary accommodation portion R2 may be connected to each other to form the integrated recess RS having an increased size, and due to a swelling pressure sufficient to brake the notch portion 313, a size of the integrated recess RS may have a smaller accommodation width than that of the recess R before the notch portion 313 is broken.

In a case where the external force absorber 320 is injected into the accommodation guide RG, the side plate 400 may be fastened to a side of the battery array 100. For example, the side plate 400 may be disposed to extend to the fixing member 330 of the end plate 300, and may cover the external force absorber 320. Accordingly, the external force absorber 320 may be separated from an external environment, and thus, may be prevented from being damaged.

In some embodiments, the fixing members 330 may be positioned at opposite peripheral portions of the second surface S2 to correspond to the external force absorbers 320, and may fix the battery module 500 to the outside.

For example, in a case where a battery pack including a plurality of battery modules 500 is constructed, the fixing member 330 may fix the corresponding battery module 500 to a housing of the battery pack.

In some embodiments, the fixing member 330 may include the bush structure 331 having a cylindrical fixed to the flat plate 310 and extending in the third direction III, and a bolt 332 passing through the bush structure 331 to be fixed to an external object.

For example, the bush structure 331 and the bolt 332 may be means for stably fixing the battery module 500, and thus, may be provided in structures with a sufficient strength. Accordingly, in order to prevent a stress concentration on the fixing member 330 due to a swelling pressure applied to the flat plate 310, the external force absorber 320 may be positioned between the fixing member 330 and the battery cell 110 as a medium for absorbing the swelling pressure.

A portion of the swelling pressure may be absorbed by the external force absorber 320, and the remaining pressure may be applied to the fixing member 330 so that a pressure applied throughout the entirety of the flat plate 310 may be maintained uniformly or substantially uniformly.

According to the battery module 500 as described above, the external force absorber 320 may be disposed at the peripheral portion of the flat plate 310 constituting the end plate 300 to reduce a magnitude of a swelling pressure applied to the fixing member having a high strength. Accordingly, a difference in pressure applied to the peripheral portion and the central portion of the flat plate 310 may be minimized or reduced to increase the uniformity of distribution of the internal stress occurring inside the flat plate 310 in response to the swelling pressure.

Accordingly, the battery module 500 may be more stably operated until the expected lifespan thereof.

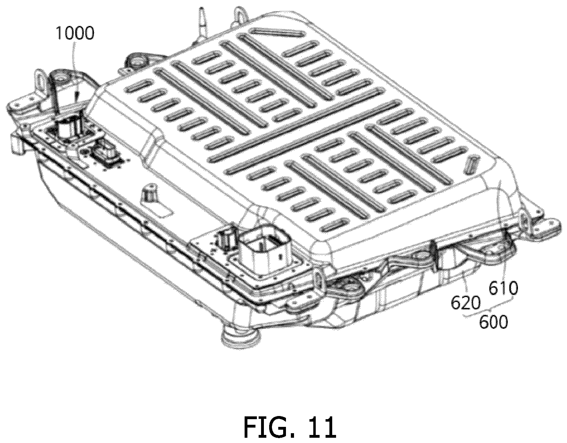

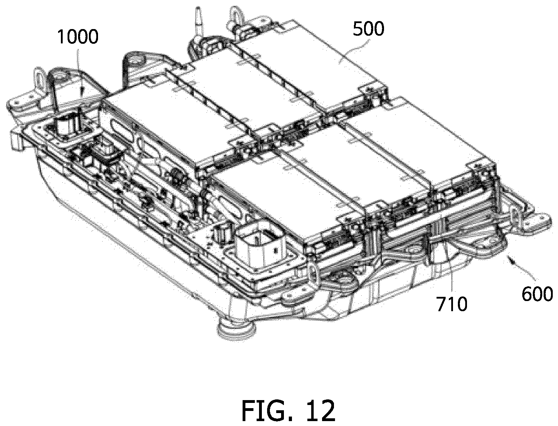

FIG. 11 illustrates a top perspective view illustrating a battery pack including the battery module shown in FIG. 1. FIG. 12 illustrates a perspective view illustrating the battery pack including the battery module shown in FIG. 1.

Referring to FIGS. 11 and 12, a battery pack 1000 according to some embodiments of the present disclosure may include a plurality of battery modules 500, and a housing 600 for accommodating the battery modules 500.

For example, the housing 600 may include upper and lower housings 610 and 620 that accommodate the battery modules 500, and are connected to (e.g., coupled to or attached to) face each other.

The battery modules 500 may be disposed in an appropriate number according to a desired output power. The battery modules 500 may be electrically connected to each other using a module busbar 710, and the battery modules 500 may be electrically connected to each other in series/parallel or in a series-parallel combination scheme using a module busbar 710 to obtain a desired electrical output power.

An external force absorber 320 capable of partially absorbing a swelling pressure of the battery cell to reduce a swelling pressure applied to a fixing member 330 may be disposed between the fixing member 330 having a high strength and the battery cell 110 in an end plate 300 of each battery module 500.

Accordingly, damage to the end plate 300 due to a swelling pressure may be prevented by reducing a difference in stress between a central portion and a peripheral portion of the end plate 300. Each battery module 500 may operate stably until the expected lifespan thereof, and thus, the lifespan of the battery pack 1000 including the battery modules 500 may also be extended.

The battery module 500 may have the same or substantially the same configuration as that of the battery module 500 described above with reference to FIGS. 1 to 10, and thus, redundant description thereof may not be repeated.

According to the end plate as described above, and the battery module and battery pack including the end plate, a swelling pressure applied to the peripheral of the end plate 300 at which the fixing member 330 having a high strength is disposed may be partially absorbed by the external force absorber 320 having an elasticity, thereby reducing a swelling pressure applied to a peripheral portion of a flat plate 310. Accordingly, a difference in pressure applied to the peripheral portion and a central portion of the flat plate 310 may be reduced, thereby increasing the uniformity of distribution of a stress occurring inside the flat plate 310.

According to some embodiments, even in a case where the fixing member 330 having a high strength is disposed at the peripheral portion of the flat plate 310, the uniformity of the stress inside the plate 310 may be increased, and a decrease in a lifespan of the end plate 300 due to non-uniformity of the stress may be suppressed.

Although the present disclosure has been described above with respect to embodiments thereof, the present disclosure is not limited thereto. Various modifications and variations can be made thereto by those skilled in the art within the spirit of the present disclosure and the equivalent scope of the appended claims.

## Claims

1. An end plate (300) for a battery frame, comprising:
a flat plate (310, 400) having insulating properties, and comprising:
a first surface (S1) configured to receive an external force;
a second surface (S2) spaced from the first surface (S1) by a thickness in a first direction I; and
a pair of accommodation guides (RG) recessed from opposite peripheral portions toward a center in a second direction (II) crossing the first direction (I);
an external force absorber (320) at least partially buried in the accommodation guides (RG) to absorb the external force applied to the peripheral portions, and uniformly adjust a distribution of a stress in the flat plate (310, 400) with respect to the external force in the second direction (II); and
a fixing member (330) on the second surface (S2) at each of the opposite peripheral portions to correspond to the external force absorber (320), and configured to be fixed to the outside.

2. The end plate (300) as claimed in claim 1, wherein the accommodation guides (RG) comprise:
one or more separation portions (311) extending in the second direction (II) from an inlet IN located in a side surface of the flat plate (310, 400), and separated from the flat plate (310, 400) in a comb-tooth shape to separate adjacent recesses (R) having a line shape from each other;
a bottom portion (312) connecting adjacent separation portions (311) to each other and providing a bottom of the recesses (R); and
a notch portion (313) connected to the one or more separation portions (311) and the flat plate (310, 400) to divide the recesses (R) between the inlet (IN) and the bottom, and to divide the recesses (R) into a primary accommodation portion (R1) connected to the inlet (IN) and a secondary accommodation portion (R2) connected to the bottom portion (312).

3. The end plate (300) as claimed in claim 2, wherein the bottom portion (312) has a rounded shape so that the recesses (R) extend in a region adjacent to the bottom portion (312).

4. The end plate (300) as claimed in claims 2 or 3, wherein the notch portion (313) comprises an appendage (313b) protruding toward the bottom portion (312) and having a breaking thickness configured to be selectively broken according to a magnitude of the external force.

5. The end plate (300) as claimed in claim 4, wherein the breaking thickness is in a range of 0.2 mm to 0.4 mm.

6. The end plate (300) as claimed in claims 4 or 5, wherein a sidewall of the one or more separation portions (311) adjacent to the notch portion (313) and a sidewall of the flat plate (310, 400) include a notch accommodation portion (314) recessed in the first direction I, and configured to accommodate a split notch (313S) from the notch portion (313) that is separated when the appendage (313b) is broken.

7. The end plate (300) as claimed in claims 1 to 6, wherein the flat plate (310, 400) comprises a plastic having the insulating properties.

8. The end plate (300) as claimed in claims 1 to 7, wherein the external force absorber (320) comprises an elastomer configured to be injected into the accommodation guides (RG) as a solid body.

9. The end plate (300) as claimed in claims 1 to 8, wherein the fixing member (330) comprises:
a bush structure (331) having a cylindrical shape fixed to the flat plate (310, 400), and extending in a third direction (III) perpendicular to the first direction (I) and the second direction (II); and
a bolt (332) configured to extend through the bush structure (331) to be fixed to an object.

10. A battery module (500) comprising:
a battery array (100) comprising a plurality of battery cells (110) aligned along a first direction (I), and having a length in the first direction (I) and a width in a second direction (II) perpendicular to the first direction (I);
a driving controller (200) on the battery array (100) and configured to control operations of the battery cells (110);
end plates (300) at a front end and a rear end, respectively, of the battery array (100) to fix the battery cells (110) in the first direction (I), and configured to absorb a swelling pressure of the battery array (100) to uniformly distribute an internal stress in the second direction (II); and
side plates (310, 400) coupled to the end plates (300) to fix side surfaces of the battery array (100).

11. The battery module (500) as claimed in claim 10, wherein the end plates (300) comprise:
a flat plate (310, 400) having insulating properties, and comprising:
a first surface (S1) in contact with the battery array (100), and configured to receive the swelling pressure;
a second surface (S2) spaced from the first surface (S1) by a thickness in the first direction (I); and
a pair of accommodation guides (RG) recessed from opposite peripheral portions toward a center in the second direction (II);
an external force absorber (320) at least partially buried in the accommodation guides (RG) to absorb the swelling pressure applied to the peripheral portions, and configured to uniformly adjust a distribution of a stress in the flat plate (310, 400) with respect to the swelling pressure in the second direction (II); and
a fixing member (330) on the second surface (S2) at each of the opposite peripheral portions to correspond to the external force absorber (320), and configured to be fixed to the outside.

12. The battery module (500) as claimed in claim 11, wherein the accommodation guides (RG) comprise:
one or more separation portions (311) extending in the second direction (II) from an inlet (IN) located in a side surface of the flat plate (310, 400), and separated from the flat plate (310, 400) in a comb-tooth shape to separate adjacent recesses (R) having a line shape from each other;
a bottom portion (312) connecting adjacent separation portions (311) to each other and provide a bottom of the recesses (R); and
a notch portion (313) connected to the one or more separation portions (311) and the flat plate (310, 400) to divide the recesses (R) between the inlet (IN) and the bottom, and to divide the recesses (R) into a primary accommodation portion (R1) connected to the inlet (IN) and a secondary accommodation portion (R2) connected to the bottom portion (312).

13. The battery module (500) as claimed in claim 12, wherein a sidewall of the one or more separation portions (311) adjacent to the notch portion (313) and a sidewall of the flat plate (310, 400) include a notch accommodation portion (314) recessed in the first direction (I), and configured to accommodate a split notch (313S) of the notch portion (313) that is separated if an appendage (313b) having a breaking thickness to be selectively broken according to a magnitude of the swelling pressure is broken.

14. The battery module (500) as claimed in claims 10 to 13, wherein the driving controller (200) comprises:
a busbar (210) connecting adjacent battery cells (110) from among the plurality of battery cells (110) to each other;
a circuit board (220) electrically connected to the busbar (210); and
a battery controller (230) on the circuit board (220) to individually control operations of the battery cells (110).

15. A battery pack (1000) comprising:
a plurality of battery modules (500) aligned along a lower housing (620), and electrically connected to each other; and
an upper housing (610) coupled to the lower housing (620) to separate the battery modules (500) from the outside,
wherein each of the battery modules (500) comprises:
a battery array (100) comprising a plurality of battery cells (110) aligned along a first direction (I), and having a length in the first direction (I) and a width in a second direction (II) perpendicular to the first direction (I);
a driving controller (200) on the battery array (100) to control operations of the battery cells (110);
end plates (300) at a front end and a rear end, respectively, of the battery array (100) to fix the battery array (100) in the first direction (I), and configured to absorb a swelling pressure of the battery array (100) to uniformly distribute an internal stress in the second direction (II); and
side plates (310, 400) coupled to the end plates (300) to fix side surfaces of the battery array (100).
